# EUROPÄISCHE PATENTSCHRIFT

(11) **EP 1 697 804 B1**
(45) Veröffentlichungstag und Bekanntmachung des Hinweises auf die Patenterteilung: **05.03.2014**
(21) Anmeldenummer: 04790284.6
(22) Anmeldetag: 12.10.2004
(51) Int. Cl.: G05B 19/10, G05B 19/05

(54) **Bediengerät mit Taster für eine speicherprogrammierbare Steuerung**
Operator device with push-buttons for a programmable logical controller
Console de commande avec boutons-poussoirs pour un automate programmable

(30) Priorität: 20.12.2003 DE 10360228
(43) Veröffentlichungstag der Anmeldung: 06.09.2006
(73) Patentinhaber: Rexroth Indramat GmbH, 97816 Lohr am Main (DE)
(72) Erfinder: KLEINFELD, Jens, 09128 Chemnitz (DE)
(86) Internationale Anmeldenummer: PCT/EP2004/011385
(87) Internationale Veröffentlichungsnummer: WO 2005/064425

(56) Entgegenhaltungen:
- WO-A-97/03390
- WO-A-99/49371
- DE-A- 3 440 917
- DE-A- 4 012 790
- DE-A- 4 236 247
- DE-A- 19 515 198
- SIEMENS AG, AUTOMATION & DRIVES, SIMATIC HMI: "SIMATIC PC - Panel PC 670/870 Operating Unit - Equipment Manual" ORDER NO. 6AV7691-0AB00-0AB0, [Online] Juli 2001 (2001-07), XP002310432 POSTFACH 48,48, D-90327, NÜRNBERG Gefunden im Internet: URL:http://www.sea.siemens.com/autogen/doc s/ipc/ppc/man/Panel%20PC670-870%20Operatin g%20Manual%207-01.pdf> [gefunden am 2004-12-13]

## Beschreibung

Die Erfindung betrifft eine Vorrichtung mit speicherprogrammierbarer Steuerung (SPS) zur Ankopplung an eine Datenschnittstelle eines Personal-Computers (PC), mit Mitteln zur Bedienung der Ein- und Ausgänge der SPS, wobei die Mittel Tasten zum Auslösen von Maschinenfunktionen umfassen.

In der Automatisierungstechnik werden durch den Einsatz speicherprogrammierbarer Steuerungen (SPS) vielfältige Aufgaben im industriellen und privaten Bereich bewältigt. Die wichtigsten Funktionselementen der bekannten SPS sind ein Programmspeicher und eine SPS-Anwenderlogik (Steuerwerk) mit Ein- und Ausgängen. Die SPS-Anwenderlogik enthält einen Mikroprozessor sowie einen Datenspeicher mit Speicherbereichen, insbesondere für Zeiten, Zähler, Merker und Prozessabbilder. Beim üblichen Arbeitsablauf fragt die SPS-Anwenderlogik zu Beginn eines jeden Zyklus die Signalzustände an den Eingängen der SPS ab und setzt eine jedem Eingang zugeordnete Speicherstelle (SPS-Merker) auf Null oder Eins. Bei einer folgenden Programmbearbeitung greift der Mikroprozessor auf das abgelegte Prozessabbild der Eingänge zurück und bearbeitet abhängig davon die im Programmspeicher stehenden Steueranweisungen. Über die Ausgänge der SPS werden schließlich Signale an die anzusteuernden Anlagen bzw. Maschinen gesendet.

Neben dem reinen Automatikbetrieb der SPS besteht jedoch immer wieder das Erfordernis, z. B. im Handbetrieb bestimmte Maschinenfunktionen durch externe Bedienmittel auszulösen. Konventionell erfolgt das manuelle Auslösen von Maschinenfunktionen über eine Tastermatrix, die auf einer Maschinenbedientafel der SPS angeordnet ist.

Bei dieser nicht gattungsgemäßen, konventionellen SPS ohne angekoppelten PC ist jeder Taster der Tastermatrix mit einem eigenen Eingang der SPS verbunden. Über die SPS-Anwenderlogik werden diese Eingänge mit Ausgängen an die zu bedienende Maschine verknüpft. Die Betätigung des Tasters löst auf diesem Weg eine Maschinenfunktion, beispielsweise das Verfahren einer Achse, aus. Dabei können Sicherheitserfordernisse ohne weiteres erfüllt werden, da die Maschinenfunktion jeweils nur solange aktiv ist, solange der Taster betätigt wird. Ein Signalverlust eines "Stoppsignals" zur Beendigung der Maschinenfunktion ist in diesem Zusammenhang von vornherein ausgeschlossen, da der SPS-Merker direkt mit dem Spannungssignal am Eingang korrespondiert. Nachteilig beim beschriebenen konventionellen Auslösen durch direkt mit einem zugehörigen SPS-Eingang verbundene externe Taster, die jeweils mit einer einzigen feststehenden Bedeutung belegt sind, ist andererseits, dass für jede Maschinenfunktion jeweils ein Taster und ein SPS-Eingang notwendig ist. Dies hat einen hohen Hardwareaufwand und eine unübersichtliche Bedienung zur Folge.

Aus WO 97/03390 ist es bekannt, eine SPS gattungsgemäß über eine Datenschnittstelle mit einem herkömmlichen PC zu koppeln, um die SPS von der gewohnten Benutzeroberfläche des PC, z. B. Tastatur und Bildschirm, aus programmieren und bedienen zu können. Maschinenfunktionen können dadurch ohne zusätzliche externe Taster, jedoch indirekt, unter Zwischenschaltung des PC, über die Tasten einer herkömmlichen PC-Tastatur ausgelöst werden.

Die DE 34 40 917 A1 zeigt eine SPS mit einer zusätzlichen Tastatur zur Anzeige von bedienerführenden Textbausteinen, die mit aktuellen Prozessdaten der SPS verknüpft sein können. Die Tastatur ist jedoch nicht zur Steuerung der SPS vorgesehen.

Darüber hinaus ist es bei herkömmlichen Benutzeroberflächen wie PC-Tastaturen allgemein bekannt, beispielsweise durch Verwendung eines Tastaturcontrollers drei verschiedene Tastenebenen einzurichten, also auf der PC-Tastatur Tasten zur Verfügung zu stellen, deren Bedeutung mit der jeweils ausgewählten Tastenebene wechselt. Von daher scheint auf der Basis der bekannten Kopplung einer SPS mit einem PC die Möglichkeit eröffnet, mindestens einige der Tasten der PC-Tastatur mit wechselnder Bedeutung für Maschinenfunktionen zu belegen und somit hinsichtlich der manuellen Bedienung einer größeren Anzahl von Maschinenfunktionen durch eine SPS zu einer Einsparung von Hardware und zu einer übersichtlicheren Bedienung zu gelangen. Tatsächlich müssten mit einer solchen Lösung jedoch starke Sicherheitsbedenken verbunden werden, da beim Drücken einer PC-Taste kein direktes Spannungssignal, sondern nur Daten, die das Abbild des Tastenzustandes repräsentieren, über die Datenschnittstelle an die SPS übermittelt werden und dort zur Belegung einer Speichereinheit in der SPS, also zum Setzen eines SPS-Merkers entsprechend dem repräsentierten Tastenzustand, führen. Die SPS-Anwenderlogik verknüpft diesen SPS-Merker mit Ausgängen an die Maschine. Eine Störung innerhalb des Kommunikationsweges vom PC zur SPS würde deshalb die nur datentechnische Verbindung zwischen Taste und Maschinenfunktion lösen. Im Störungsfall bliebe in der SPS der letzte Tastenzustand aktiv. Im Zustand " Taste Ein " könnte der Zustandswechsel auf " Taste Aus " nicht an die SPS übertragen werden, d. h. eine beispielsweise in Bewegung gesetzte Maschine würde sich unerwünschterweise weiterbewegen.

Es ist Aufgabe der Erfindung, unter Gewährung hinreichender Sicherheit gegenüber Signalverlusten eine SPS mit Tasten mit wechselnder Bedeutung zum Auslösen von Maschinenfunktionen zur Verfügung zu stellen.

Diese Aufgabe wird erfindungsgemäß durch eine Vorrichtung gemäß Anspruch 1 gelöst. Vorteilhafte Weiterbildungen der Erfindung sind in den Unteransprüchen 2 bis 10 angegeben.

Die erfindungsgemäße Vorrichtung umfasst eine speicherprogrammierbare Steuerung und zeichnet sich im einzelnen zunächst dadurch aus, dass die Tasten als zusätzlich zur herkömmlichen Benutzeroberfläche des PC vorgesehene Taster ausgebildet sind, die jeweils direkt mit einem der SPS-Eingänge elektrisch verbunden sind. Des Weiteren ist von der herkömmlichen Benutzeroberfläche des PC aus eine von mehreren Tastenebenen mit jeweils festgelegten und im PC abgespeicherten Bedeutungen für die Taster auswählbar. Um die durch diese Maßnahmen konstituierten separaten Elemente " Tastersignal "und " Bedeutung " funktional zu kombinieren, ist in der SPS eine Daten verarbeitende, mit den SPS-Eingängen verbundene Steuereinheit vorgesehen, die vom PC über die Datenschnittstelle die Informationen über die Tastenbelegung der Taster in der jeweils ausgewählten Tastenebene erhält und mit einem an einem SPS-Eingang anliegenden Tastersignal verknüpft.

Die erfindungsgemäße SPS mit angekoppeltem PC und mit zusätzlichen, direkt mit den SPS-Eingängen verbundenen Tastern ermöglicht auf diese Weise die Einsparung von Hardware durch die Bereitstellung von relativ wenigen zusätzlichen Tastern, die jedoch mit wechselnder Bedeutung belegt werden können. Erfindungsgemäß werden jedoch Tasten mit wechselnder Bedeutung geschaffen, bei denen gleichzeitig, durch das Vorsehen einer Direktverbindung zwischen den Tastern und den zugehörigen SPS-Eingängen, ein Ausschluss von Signalverlusten beim Auslösen von Maschinenfunktionen gewährleistet ist.

Besonders bevorzugt sind Ausführungsformen, bei denen die Taster jeweils parallel zu den SPS-Eingängen mit einem internen Bus des PC verbunden sind, so dass durch jeweils einen Taster gleichzeitig Maschinenfunktionen und der Tastenbelegung zugeordnete und im PC abgespeicherte Oberflächenfunktionen des PC auslösbar sind. Die Parallelität beim Auslösen von Maschinen- und Oberflächenfunktionen erstreckt sich also nicht nur auf die Möglichkeit der gleichzeitigen Auslösung, sondern auch auf eine gleichartige Auslösung über einen Tastentyp.

Diese Ausführungsformen sind vorteilhaft dadurch realisierbar, dass im PC eine Daten verarbeitende, über den internen Bus mit den Tastern verbundene erste Steuereinheit vorgesehen ist, die die Informationen über die den Tastern zugeordneten Oberflächenfunktionen erhält und mit einem am internen Bus anliegenden Tastersignal zu einem Startsignal für die diesem Taster zugeordneten Oberflächenfunktionen verknüpft.

Gemäß einer weiteren vorteilhaften Ausführungsform ist im PC eine Daten verarbeitende zweite Steuereinheit vorgesehen, die mit einem Bildschirm des PC verbunden ist und die Informationen über eine der Tastenbelegung entsprechende Tastenbeschriftung erhält, so dass die Tastenbelegung der jeweils ausgewählten Tastenebene durch eine Tastenbeschriftung auf dem Bildschirm des PC visualisierbar ist.

Dabei ist es von Vorteil, wenn die zweite PC-Steuereinheit von der SPS-Steuereinheit über die Datenschnittstelle Zustandsinformationen über die Taster erhält, so dass die optische Darstellung der Tastenbeschriftung der einzelnen Taster abhängig von den Zustandsinformationen über die einzelnen Taster gestaltet werden kann.

Nach einer Variante sind die Taster so in der Nähe des Bildschirms des PC angeordnet, dass vom Bediener der Vorrichtung ein direkter Zusammenhang zur Tastenbeschriftung und/oder zur Taster-Zustandsinformation auf dem Bildschirm herstellbar ist.

Bei allen Varianten mit Tastenbeschriftung über Bildschirm ist es vorteilhaft, wenn die Software im PC so ausgebildet ist, dass die Tastenbeschriftung in reservierten, nicht durch andere Anzeigefunktionen überdeckbaren Bereichen des Bildschirms visualisierbar ist. Im Übrigen sind alle Varianten mit Tastenbeschriftung realisierbar, ohne die zuvor genannten Ausführungsformen mit paralleler Auslösung von Maschinen- und Oberflächenfunktionen vorauszusetzen.

Weitere Ausführungsformen zeichnen sich dadurch aus, dass im PC eine zentrale Speichereinheit vorgesehen ist, in der für jede auswählbare Tastenebene eine Datenmatrix abgelegt ist, in der jedem der Taster eine Datenzeile mit Informationen zugeordnet ist, die spaltenweise unterschiedlichen Zwecken zugewiesen sind. Die Datenmatrix bietet Vorteile hinsichtlich der internen Organisation von an sich herkömmlichen, hier jedoch im Zusammenspiel mit der SPS und den Tastern mit wechselnder Bedeutung eingesetzten Betriebsmitteln des PC.

Ein Ausführungsbeispiel der Erfindung wird im Folgenden anhand der Zeichnung näher erläutert. Es zeigen:
Figur 1 ein Blockschaltbild zur Darstellung des Zusammenwirkens der Komponenten der SPS und des angekoppelten PC bei einer Ausführungsform der Erfindung,
Figur 2 eine schematische Darstellung von wesentlichen Teilen der Benutzeroberfläche einer erfindungsgemäßen SPS,
Figur 3 eine symbolische Darstellung einer zentralen Speichereinheit im PC mit der dort abgelegten, für eine bestimmte auswählbare Tastenebene festgelegten Datenmatrix.

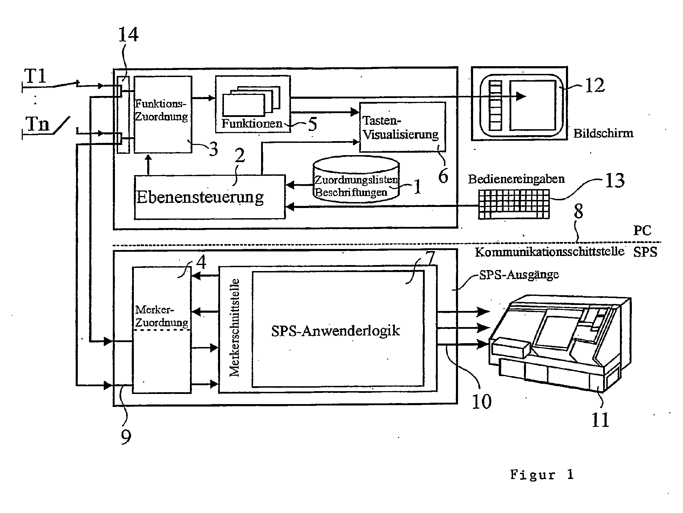

Figur 1 zeigt ein Blockschaltbild, wobei im Folgenden zunächst die grundsätzliche Hardwareanordnung gemäß der Erfindung erläutert werden soll.

Im unteren in Figur 1 dargestellten Block sind Komponenten, insbesondere eine Steuereinheit Merkerzuordnung 4 und eine SPS-Anwenderlogik 7, des Steuergerätes einer SPS dargestellt, wobei die Merkerzuordnung 4 über eine Daten- bzw. Kommunikationsschnittstelle 8 mit dem im oberen Block dargestellten PC verbunden ist. Ferner erkennbar sind als Taster T1 bis Tn ausgebildete Tasten, die primär direkt mit den Eingängen 9 der SPS verbunden sind. Die Ausgänge 10 der SPS sind, wie angedeutet, mit einer durch die SPS zu steuernden Maschine 11 verbunden. Der PC mit Bildschirm 12 und herkömmlicher Tastatur 13 dient als Mensch-Maschine-Interface und realisiert Bedien- und Anzeigefunktionen (z. B. Editoren, Positionsanzeigen), nachfolgend als Oberflächenfunktionen 5 bezeichnet. Die Anwenderlogik 7 der SPS kommuniziert mit der Steuereinheit Merkerzuordnung 4 und verknüpft die Eingänge 9 mit den Ausgängen 10 und löst damit Funktionen der Maschine 11, z. B. eine Vorschubfreigabe für einen Antrieb, aus.

Wesentlich ist die Realisierung der zusätzlichen Daten verarbeitenden Steuereinheit Merkerzuordnung 4 in der SPS. Diese Merkerzuordnung 4 ist einerseits direkt mit den SPS-Eingängen 9 und damit mit den externen Tastern T1 bis Tn verbunden und hat andererseits, über die Datenschnittstelle 8, Zugriff auf Informationen über die festgelegte und im PC abgespeicherte Bedeutung der Taster T1 bis Tn. Die SPS-Anwenderlogik 7 greift nur mittelbar, über die Merkerzuordnung 4, auf die SPS-Eingänge 9 zu, wobei die Merkerzuordnung 4 die - über den PC änderbare - tastenebenenabhängige Bedeutung eines als Spannungssignal an einem SPS Eingang 9 anliegenden Tastensignals beisteuert. Wenn der Bediener, z. B. über die Tastatur 13, eine Tastenebene ausgewählt hat, so wird die Tastenbelegung, also die Bedeutung der einzelnen Tasten in der ausgewählten Tastenebene, vom PC über die Datenschnittstelle 8 an die Merkerzuordnung 4 übermittelt. In der SPS-Anwenderlogik 7 wird also nur dann ein SPS-Merker für eine bestimmte Maschinenfunktionen gesetzt (und dort dann weiterprozessiert), wenn die (für alle n Taster) entsprechend der ausgewählten Tastenebene vom PC zur Merkerzuordnung 4 überspielten Informationen mit einem an einem bestimmten SPS-Eingang 9 tatsächlich anliegenden Tastersignal zusammentreffen. Durch diese Kombination ist die Änderbarkeit der Tastenbedeutung einerseits bei gleichzeitigem Ausschluss von sicherheitsbedenklichen Signalverlusten der Taster T1 bis Tn andererseits gewährleistet. Die Merkerzuordnung 4 kann ohne weiteres softwaremäßig im Betriebsprogramm der SPS implementiert werden.

Bei der Figur 1 dargestellten Ausführungsform der Erfindung sind die Taster T1 bis Tn mit dem ISA-Bus 14 des PC und parallel mit den n SPS-Eingängen 9 verbunden. Mit dieser Schaltungsanordnung ist sichergestellt, dass ein Betätigen der Taster T1 bis Tn ein Flankensignal in der ersten PC-Steuereinheit Funktionszuordnung 3 und in der Steuereinheit Merkerzuordnung 4 der SPS auslöst. Bei der internen Organisation der an sich herkömmlichen Betriebsmittel im PC ist im Rahmen der in Figur 1 gezeigten Ausführungsform der erfindungsgemäßen SPS eine zentrale Speichereinheit 1 vorgesehen, in der für jede auswählbare Tastenebene eine weiter unten noch näher beschriebene Datenmatrix abgelegt ist, in der jedem der n Taster eine Datenzeile mit Informationen zugeordnet ist, die spaltenweise unterschiedlichen Zwecken zugewiesen sind.

Im Einzelnen wird, gemäß Figur 1, über Bedienereingaben, gegebenenfalls abhängig vom Zustand der Maschine 11, ein Bedienbereich mit einer zugehörigen Tastenebene ausgewählt. Diese Tastenebene ist Eingangsparameter für das zentrale Steuerelement Ebenensteuerung 2. Die Ebenensteuerung 2 dient als Datenweiche zwischen der zentralen Speichereinheit 1 und den Daten verarbeitenden Steuereinheiten Funktionszuordnung 3, Merkerzuordnung 4 und Tastenvisualisierung 6:
Die Steuereinheit Tastenvisualisierung 6 erhält die Informationen Beschriftung. Sie ist verantwortlich für die Bildschirmausgaben. Die Steuereinheit Funktionszuordnung 3 erhält die Information PC-Funktionsidentifikation. Sie verknüpft das Tastersignal mit der PC-Funktionsidentifikation zum Startsignal für die entsprechende Oberflächenfunktion 5. Die Steuereinheit Merkerzuordnung 4 erhält die Informationen SPS-Funktionsmerker und SPS Rückmeldungsmerker über die Datenschnittstelle 8. Sie verknüpft das Tastersignal mit dem SPS-Funktionsmerker, der dann über die SPS-Anwenderlogik 7 zu einem Ausgangssignal an die Maschine 11 verarbeitet wird. Als zweite Funktion sendet die Merkerzuordnung 4 den Zustand des SPS-Rückmeldungsmerkers über die Datenschnittstelle 8 an die PC-Steuereinheit Tastenvisualisierung 6.

Zur weiteren Erläuterung der Funktionsweise der in Figur 1 dargestellten Ausführungsform werden im Folgenden die Signalwege für das Auslösen einer Oberflächen- bzw. Maschinenfunktion beschrieben.

### Signalweg beim Auslösen einer Oberflächenfunktion:

Taster T1 bis Tn betätigen → über die ISA-Bus 14 Flankensignal in Steuereinheit Funktionszuordnung 3 auslösen → Verknüpfung mit PC-Funktions-ID → Start der Oberflächenfunktion 5 → Signal "Funktion Ein" an Tastenvisualisierung 6 senden → Visualisierung auf dem Bildschirm 12 "Funktion Ein".

Taster T1 bis Tn loslassen → Oberflächenfunktion 5 bleibt aktiv, bis durch Bediener oder andere Funktion 5 beendet.

### Signalweg beim Auslösen einer Maschinenfunktion:

Taster T1 bis Tn betätigen → über SPS-Eingang Flankensignal in Steuereinheit Merkerzuordnung 4 auslösen → Setzen des SPS-Funktionsmerkers → Anwenderlogik 7 verknüpft den Merker mit anderen SPS-Informationen → Setzen des zugeordneten SPS-Ausgangs 10 (Start Maschinenfunktion), wenn alle Bedingungen erfüllt sind → Setzen des SPS-Rückmeldungsmerkers → Flankensignal in Steuereinheit Merkerzuordnung 4 auslösen → Merkerzustand über Datenschnittstelle 8 an Steuereinheit Tastenvisualisierung 6 senden → Visualisierung auf dem Bildschirm 12 "Funktion Ein".

Taster T1 bis Tn loslassen → über SPS-Eingang 9 Flankensignal in Steuereinheit Merkerzuordnung 4 auslösen → Rücksetzen des SPS-Funktionsmerkers → Anwenderlogik 7 verknüpft den Merker mit anderen SPS-Informationen → Rücksetzen des zugeordneten SPS-Ausgangs 10 (Stop Maschinenfunktion), wenn keine Selbsthaltung → Rücksetzen des SPS-Rückmeldungsmerkers → Flankensignal in Steuereinheit Merkerzuordnung 4 auslösen → Merkerzustand über Datenschnittstelle 8 an Tastenvisualisierung 6 senden → Visualisierung auf dem Bildschirm "Funktion Aus".

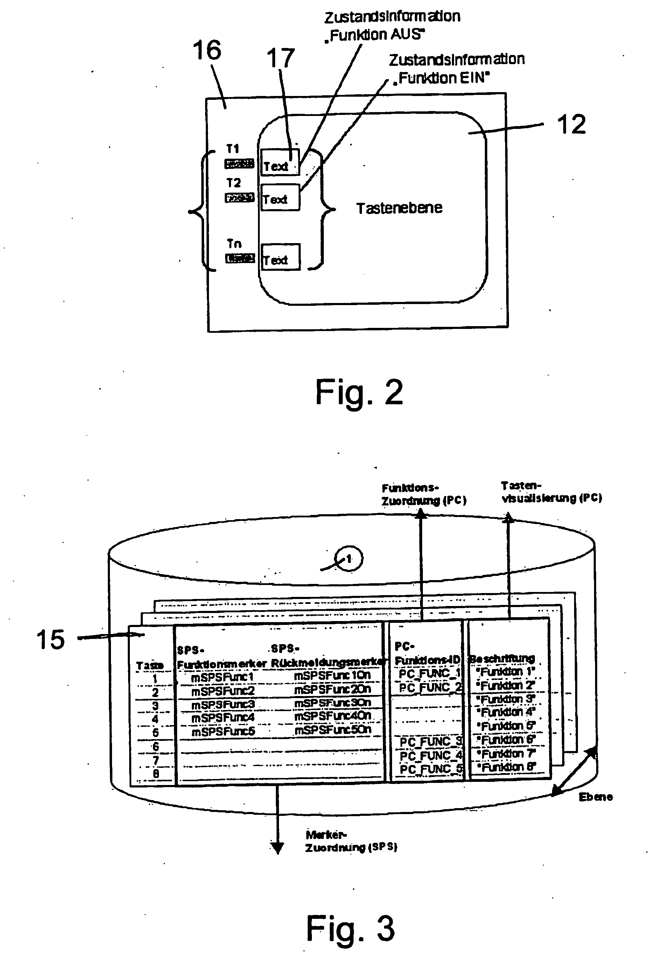

In Figur 2 ist beispielhalber eine als Monitor 16 mit Bildschirm 12 und zusätzlichen Tastern T1 bis Tn ausgebildete Benutzeroberfläche der erfindungsgemäßen SPS dargestellt. Die dargestellten Tasten sind als Taster ausgeführt. Sie sind vorteilhaft in unmittelbarer Nähe des Bildschirms 12 so anzuordnen, dass vom Bediener ein direkter Zusammenhang zur Beschriftung und Zustandsinformation auf dem Bildschirm 12 hergestellt werden kann. Die Tastenbeschriftung 17 erfolgt in reservierten Bereichen des Bildschirms 12. Die Zustandsinformation kann beispielsweise über eine Änderung der Farbe der Tastenbeschriftung 17 visualisiert werden. Eine definierte Anzahl von Tastern T1 bis Tn ist zu einer Tastengruppe zusammengefasst. Die Bedeutung der Tasten wechselt immer für die gesamte Tastengruppe und kann in einer abstrakten Tastenebene zusammengefasst werden.

In einer in Figur 3 symbolisch gezeigten zentralen Speichereinheit 1 des PC ist die Datenbasis der Tastenbelegung abgelegt. Dabei sind 1 bis n Tastern in einer zweidimensionalen Datenmatrix 15 folgende Informationen zugeordnet:
- SPS Funktionsmerker
   - ist mit dem entsprechenden SPS-Eingang 9 verbunden und stellt ein 1:1 Abbild des Tastenzustandes dar. Diese Spalte der Datenmatrix 15 ist bei allen Ausführungsformen mit Datenmatrix 15 zwingend vorhanden.
- SPS-Rückmeldungsmerker
   - wird von der SPS-Anwenderlogik 7 gesetzt, wenn die Maschinenfunktion aktiv ist.
- PC-Funktions-ID
   - Funktionsidentifikation der Oberflächenfunktion 5, z. B. Fehlermeldung, die bei Betätigen des Tasters gestartet wird.
- Beschriftung

Für jede Tastenebene ist in der zentralen Speichereinheit 1 eine Datenmatrix 15 abgelegt, wie in Figur 3 für beispielsweise drei Tastenebenen angedeutet.

Die unterschiedlichen Informationen der Datenmatrix 15 werden, wie durch die Pfeile in Figur 3 angedeutet, an verschiedene (bzw. für bestimmungsmäßig zusammengehörige Informationen gleiche) Daten verarbeitende Steuereinheiten 3, 4 und 6 weitergeleitet.

### Bezugszeichenliste

- 1: PC-Speichereinheit
- 2: PC-Steuerelement Ebenensteuerüng
- 3: PC-Steuereinheit Funktionszuordnung
- 4: PC-Steuereinheit Merkerzuordnung
- 5: PC-Oberflächenfunktionen
- 6: PC-Steuereinheit Tastenvisualisierung
- 7: SPS-Anwendungslogik
- 8: Datenschnittstelle
- 9: SPS-Eingang
- 10: SPS-Ausgang
- 11: Maschine
- 12: PC-Bildschirm
- 13: PC-Tastatur
- 14: PC-Bus
- 15: Datenmatrix in 1
- 16: PC-Monitor
- 17: Tastenbeschriftung auf PC-Bildschirm 12
- T1: bis Tn Taster

## Patentansprüche

1. Vorrichtung, umfassend eine Speicherprogrammierbare Steuerung (SPS) mit Ein- und Ausgängen (9,10), einen PersonalComputer (PC) mit Datenschnittstelle (8) und eine Einrichtung zur Bedienung der Ein- und Ausgänge (9, 10), wobei die Einrichtung Tasten (T₁ bis Tₙ) zum Auslösen von Maschinenfunktionen umfasst und wobei die SPS mittels der Datenschnittstelle (8) mit dem PC verbunden ist,
**dadurch gekennzeichnet,**
- **dass** die Tasten (T1 bis Tn) als zusätzlich zur herkömmlichen Benutzeroberfläche (13) des PC vorgesehene Taster (T1 bis Tn) ausgebildet sind, die jeweils elektrisch mit einem der SPS-Eingänge (9) verbunden sind,
- **dass** von der herkömmlichen Benutzeroberfläche (13) des PC aus eine von mehreren Tastenebenen mit jeweils festgelegten und im PC abgespeicherten Bedeutungen für die Taster (T1 bis Tn) auswählbar ist,
- und **dass** in der SPS eine Daten verarbeitende, mit den SPS-Eingängen (9) verbundene Steuereinheit (4) vorgesehen ist, welche derart realisiert ist, dass von der Steuereinheit (4) mittels der Datenschnittstelle (8) vom PC erhaltene Informationen über die Tastenbelegung der Taster (T1 bis Tn) in der jeweils ausgewählten Tastenebene und mit einem an einem SPS-Eingang (9) anliegenden Tastersignal verknüpfbar sind.

2. Vorrichtung nach Anspruch 1,
**dadurch gekennzeichnet, dass** die Taster (T1 bis Tn) jeweils parallel zu den SPS-Eingängen (9) mit einem internen Bus (14) des PC verbunden sind, so dass durch jeweils einen Taster (T1 bis Tn) gleichzeitig Maschinenfunktionen und der Tastenbelegung zugeordnete und im PC abgespeicherte Oberflächenfunktionen (5) des PC auslösbar sind.

3. Vorrichtung nach Anspruch 2,
**dadurch gekennzeichnet, dass** im PC eine Daten verarbeitende, über den internen Bus (14) mit den Tastern (T1 bis Tn) verbundene erste Steuereinheit (3) vorgesehen ist, die die Informationen über die den Tastern (T1 bis Tn) zugeordneten Oberflächenfunktionen (5) erhält und mit einem am internen Bus (14) anliegenden Tastersignal zu einem Startsignal für die diesem Taster (T1 bis Tn) zugeordneten Oberflächenfunktionen (5) verknüpft.

4. Vorrichtung nach einem der Ansprüche 1 bis 3,
**dadurch gekennzeichnet, dass** im PC eine Daten verarbeitende zweite Steuereinheit (6) vorgesehen ist, die mit einem Bildschirm (12) des PC verbunden ist und die Informationen über eine der Tastenbelegung entsprechende Tastenbeschriftung (17) erhält, so das die Tastenbelegung der jeweils ausgewählten Tastenebene durch eine Tastenbeschriftung (17) auf dem Bildschirm (12) auf des PC visualisierbar ist.

5. Vorrichtung nach Anspruch 4,
**dadurch gekennzeichnet, dass** die zweite PC-Steuereinheit (6) von der SPS-Steuereinheit (4) über die Datenschnittstelle (8) Zustandsinformationen über die Taster (T1 bis Tn) erhält und dass die optische Darstellung der Tastenbeschriftung (17) der einzelnen Taster (T1 bis Tn) abhängig von den Zustandsinformationen über die einzelnen Taster (T1 bis Tn) ist.

6. Vorrichtung nach Anspruch 4 oder 5,
**dadurch gekennzeichnet, dass** die Taster (T1 bis Tn) so in der Nähe des Bildschirms (12) des PC angeordnet sind, dass vom Bediener der Vorrichtung ein direkter Zusammenhang zur Tastenbeschriftung (17) und/oder Taster-Zustandsinformation auf dem Bildschirm (12) herstellbar ist.

7. Vorrichtung nach einem der Ansprüche 4 bis 6,
**dadurch gekennzeichnet, dass** die Software im PC so ausgebildet ist, dass die Tastenbeschriftung (17) in reservierten, nicht durch andere Anzeigefunktionen überdeckbaren Bereichen des Bildschirms (12) visualisierbar ist.

8. Vorrichtung nach einem der Ansprüche 1 bis 7,
**dadurch gekennzeichnet, dass** im PC eine zentrale Speichereinheit (1) vorgesehen ist, in der für jede auswählbare Tastenebene eine Datenmatrix (15) abgelegt ist, in der jedem der Taster (T1 bis Tn) sich eine Datenzeile mit Informationen zugeordnet ist, die spaltenweise unterschiedlichen Zwecken zugewiesen sind.

9. Vorrichtung nach Anspruch 8,
**dadurch gekennzeichnet, dass** im PC ein zentrales Steuerelement Ebenensteuerung (2) vorgesehen ist, welches als Datenweiche zwischen der zentralen Speichereinheit (1), der als Funktionszuordnung (3) ausgebildeten ersten PC-Steuereinheit, der als Tastenvisualisierung (6) ausgebildeten zweiten PC-Steuereinheit und der als Merkerzuordnung (4) ausgebildeten SPS-Steuereinheit dient.

10. Vorrichtung nach Anspruch 9, **dadurch gekennzeichnet,**
- **dass** in der Datenmatrix (15) jedem Taster (T1 bis Tn) ein der Belegung des Tasters (T1 bis Tn) in der ausgewählten Tastenebene entsprechender SPS-Funktionsmerker, ein SPS-Rückmeldungsmerker, eine Beschriftungs-Information und eine der Belegung des Tasters (T1 bis Tn) zugeordnete PC-Funktionsidentifikation der Oberflächenfunktion (5) aufweist,
- und **dass** jeweils die erste PC-Steuereinheit Funktionszuordnung (3) die Information PC-Funktionsidentifikation, die zweite PC-Steuereinheit Tastenvisualisierung (6) die Information Beschriftung und die SPS-Steuereinheit Merkerzuordnung (4) die Informationen SPS-Funktionsmerker und SPS-Rückmeldungsmerker über das Steuerelement Ebenensteuerung (2) von der zentralen Speichereinheit (1) erhält.

## Claims

1. Apparatus comprising a programmable logic controller (PLC) with inputs and outputs (9, 10), a personal computer (PC) with a data interface (8), and a device for operating the inputs and outputs (9, 10), the device comprising buttons (T1 to Tn) for triggering machine functions, and the PLC being connected to the PC by means of the data interface (8),
**characterized**
- **in that** the buttons (T1 to Tn) are in the form of pushbuttons (T1 to Tn) which are provided in addition to the conventional user interface (13) of the PC and are each electrically connected.to one of the PLC inputs (9),
- **in that** one of a plurality of button levels with meanings which are each stipulated and stored in the PC can be selected for the buttons (T1 to Tn) from the conventional user interface (13) of the PC,
- and **in that** a control unit (4) which processes data and is connected to the PLC inputs (9) is provided in the PLC, which control unit is implemented in such a manner that information relating to the button assignment of the pushbuttons (T1 to Tn) in the respectively selected button level, which is obtained from the PC by the control unit (4) using the data interface (8), can be linked to a pushbutton signal applied to a PLC input (9).

2. Apparatus according to Claim 1,
**characterized in that** the pushbuttons (T1 to Tn) are each connected to an internal bus (14) of the PC in a manner parallel to the PLC inputs (9), with the result that machine functions and interface functions (5) of the PC, which are associated with the button assignment and are stored in the PC, can be simultaneously triggered by one pushbutton (T1 to Tn) in each case.

3. Apparatus according to Claim 2,
**characterized in that** a first control unit (3) which processes data and is connected to the pushbuttons (T1 to Tn) via the internal bus (14) is provided in the PC, which control unit obtains the information relating to the interface functions (5) associated with the pushbuttons (T1 to Tn) and links said information to a pushbutton signal applied to the internal bus (14) to form a start signal for the interface functions (5) associated with this pushbutton (T1 to Tn).

4. Apparatus according to one of Claims 1 to 3,
**characterized in that** a second control unit (6) which processes data is provided in the PC, which control unit is connected to a screen (12) of the PC and obtains the information relating to button labelling (17) corresponding to the button assignment, with the result that the button assignment for the respectively selected button level can be visualized on the screen (12) of the PC by means of button labelling (17).

5. Apparatus according to Claim 4,
**characterized in that** the second PC control unit (6) obtains state information relating to the pushbuttons (T1 to Tn) from the PLC control unit (4) via the data interface (8), and **in that** the optical presentation of the button labelling (17) of the individual pushbuttons (T1 to Tn) is dependent on the state information relating to the individual pushbuttons (T1 to Tn).

6. Apparatus according to Claim 4 or 5,
**characterized in that** the pushbuttons (T12 to Tn) are arranged in the vicinity of the screen (12) of the PC in such a manner that the operator of the apparatus can establish a direct relationship between the button labelling (17) and/or pushbutton state information on the screen (12).

7. Apparatus according to one of Claims 4 to 6,
**characterized in that** the software in the PC is designed in such a manner that the button labelling (17) can be visualized in reserved areas of the screen (12) which cannot be covered by other display functions.

8. Apparatus according to one of Claims 1 to 7,
**characterized in that** a central memory unit (1) is provided in the PC and stores a data matrix (15) for each button level which can be selected, a data row containing information which is allocated to different purposes in columns being associated with each of the pushbuttons (T1 to Tn) in said data matrix.

9. Apparatus according to Claim 8,
**characterized in that** a central control element for level control (2) is provided in the PC and is used as a data switch between the central memory unit (1), the first PC control unit designed as function allocation (3), the second PC control unit designed as button visualization (6) and the PLC control unit designed as flag allocation (4).

10. Apparatus according to Claim 9, **characterized**
- **in that**, in the data matrix (15), each pushbutton (T1 to Tn) has a PLC function flag corresponding to the assignment of the pushbutton (T1 to Tn) in the selected button level, a PLC feedback flag, an item of labelling information and a PC function identification of the interface function (5) that is associated with the assignment of the pushbutton (T1 to Tn),
- and **in that** the first PC control unit for function allocation (3) obtains the PC function identification information, the second PC control unit for button visualization (6) obtains the labelling information and the PLC control unit for flag allocation (4) obtains the PLC function flag and PLC feedback flag information from the central memory unit (1) in each case via the control element for level control (2).

## Revendications

1. Dispositif comprenant un automate programmable (SPS) comportant des entrées et des sorties (9, 10), un ordinateur personnel (PC) comportant une interface de données (8) et un moyen destiné à attaquer les entrées et sorties (9, 10), dans lequel le moyen comprend des touches (T1 à Tn) destinées à déclencher des fonctions de machine et dans lequel l'automate programmable est connecté au PC par l'intermédiaire de l'interface de données (8),
**caractérisé**
- **en ce que** les touches (T1 à Tn) sont réalisées sous la forme de boutons poussoirs (T1 à Tn) prévus en plus de l'interface utilisateur classique (13) du PC, lesquels boutons poussoirs sont respectivement électriquement connectés à l'une des entrées (9) de l'automate programmable,
- **en ce que** l'un de plusieurs niveaux de touches ayant chacun des significations définies et stockées dans le PC peut être sélectionné depuis l'interface utilisateur classique (13) du PC pour les boutons poussoirs (T1 à Tn),
- et **en ce qu'**il est prévu dans l'automate programmable une unité de commande (4) qui traite des données et qui est connectée aux entrées (9) de l'automate programmable, qui est réalisée de manière à ce que des informations obtenues depuis le PC par l'unité de commande (4) au moyen de l'interface de données (8) et concernant l'affectation de touches des boutons poussoirs (T1 à Tn), au niveau de touche respectivement sélectionné, puissent être combinées à un signal de bouton poussoir appliqué à une entrée (9) de l'automate programmable.

2. Dispositif selon la revendication 1, **caractérisé en ce que** les boutons poussoirs (T1 à Tn) sont respectivement connectés en parallèle par rapport aux entrées (9) de l'automate programmable à un bus interne (14) du PC, de manière à ce que des fonctions de machine et les fonctions d'interface (5) du PC associées aux affectations de touches et stockées dans le PC puissent être déclenchées simultanément par un bouton poussoir (T1 à Tn) respectif.

3. Dispositif selon la revendication 2, **caractérisé en ce qu'**il est prévu dans le PC une première unité de commande (3) qui traite des données, qui est connectée aux boutons poussoirs (T1 à Tn) par l'intermédiaire du bus interne (14), qui obtient les informations concernant les fonctions d'interface (5) associées aux boutons poussoirs (T1 à Tn) et qui les combine à un signal de bouton poussoir appliqué au bus interne (14) pour obtenir un signal de déclenchement destiné aux fonctions d'interface (5) associées à ce bouton poussoir (T1 à Tn).

4. Dispositif selon l'une quelconque des revendications 1 à 3, **caractérisé en ce qu'**il est prévu dans le PC une seconde unité de commande (6) qui traite des données, qui est connectée à un écran (12) du PC et qui obtient les informations concernant une légende de touche (17) correspondant à l'affectation de touches, de manière à ce que l'affectation de touches du niveau de touche respectivement sélectionné puisse être visualisée sur l'écran (12) du PC au moyen d'une légende de touche (17).

5. Dispositif selon la revendication 4, **caractérisé en ce que** la seconde unité de commande de PC (6) obtient de l'unité de commande d'automate programmable (4) des informations d'état concernant les boutons poussoirs (T1 à Tn) par l'intermédiaire de l'interface de données (8) et **en ce que** la représentation optique des légendes de touches (17) des boutons poussoirs individuels (T1 à Tn) dépend des informations d'état concernant les boutons poussoirs (T1 à Tn).

6. Dispositif selon la revendication 4 ou 5, **caractérisé en ce que** les boutons poussoirs (T1 à Tn) sont agencés à proximité de l'écran (12) du PC de manière à ce qu'une relation directe puisse être établie par l'utilisateur du dispositif avec la légende de touche (17) et/ou l'information d'état de bouton poussoir sur l'écran (12).

7. Dispositif selon l'une quelconque des revendications 4 à 6, **caractérisé en ce que** le logiciel du PC est conçu de manière à ce que la légende de touche (17) puis être visualisée dans des zones réservées de l'écran (12) qui ne peuvent pas être masquées par d'autres fonctions d'affichage.

8. Dispositif selon l'une quelconque des revendications 1 à 7, **caractérisé en ce qu'**il est prévu dans le PC une unité centrale de mémoire (1) dans laquelle est stockée une matrice de données (15) destinée à chaque niveau de touches pouvant être sélectionné, dans laquelle, à chacun des boutons poussoirs (T1 à Tn) est associée une ligne de données contenant des informations qui sont affectées colonne par colonne à des fonctions différentes.

9. Dispositif selon la revendication 8, **caractérisé en ce qu'**il est prévu dans le PC un élément central de commande destiné à la commande de niveau (2), lequel élément joue le rôle de répartiteur de données entre l'unité centrale de mémoire (1), la première unité de commande de PC sous forme d'affectation de fonction (3), la seconde unité de commande de PC sous forme de visualisation de touches (6) et l'unité de commande d'automate programmable sous forme d'affectation d'indicateurs (4).

10. Dispositif selon la revendication 9, **caractérisé**
- **en ce que**, dans la matrice de données (15), à chaque bouton poussoir (T1 à Tn) est associé un indicateur de fonction d'automate programmable correspondant à l'affectation du bouton poussoir (T1 à Tn) au niveau de touche sélectionné, un indicateur de retour d'informations d'automate programmable, une information de légende et une identification de fonction de PC associée à l'affectation du bouton poussoir (T1 à Tn) pour la fonction d'interface (5),
- et **en ce que**, respectivement, la première unité de commande de PC destinée à l'affectation de fonction (3) obtient l'information "identification de fonction de PC", la seconde unité de commande de PC destinée à la visualisation de touches (6) obtient l'information "légende" et l'unité de commande d'automate programmable destinée à l'affectation d'indicateurs (4) obtient les informations "indicateur de fonction d'automate programmable" et "indicateur de retour d'informations d'automate programmable" par l'intermédiaire de l'élément de commande destiné à la commande de niveau (2) de l'unité centrale de mémoire (1).
